# EUROPÄISCHE PATENTSCHRIFT

(11) **EP 3 238 934 B1**
(45) Veröffentlichungstag und Bekanntmachung des Hinweises auf die Patenterteilung: **18.04.2018**
(21) Anmeldenummer: 16166988.2
(22) Anmeldetag: 26.04.2016
(51) Int. Cl.: G01N 21/359, G01N 21/3563, G01N 21/84

(54) **VERFAHREN ZUR BESTIMMUNG DES AUSHÄRTUNGSGRADES VON MINDESTENS EINER AUF EINER HOLZWERKSTOFFPLATTE ANGEORDNETEN WÄRMEHÄRTBAREN FORMALDEHYDHALTIGEN HARZSCHICHT**
METHOD FOR DETERMINING THE DEGREE OF CURING OF AT LEAST ONE THERMOSETTING FORMALDEHYDE-CONTAINING RESIN LAYER ARRANGED ON A WOOD-BASED MATERIAL BOARD
PROCÉDÉ DE DÉTERMINATION DU DEGRÉ DE DURCISSEMENT D'AU MOINS UNE COUCHE THERMODURCISSABLE EN RÉSINE CONTENANT DU FORMALDÉHYDE DISPOSÉE SUR UN PANNEAU À BASE DE BOIS

(43) Veröffentlichungstag der Anmeldung: 01.11.2017
(73) Patentinhaber: SWISS KRONO Tec AG, 6004 Luzern (CH)
(72) Erfinder: BRAUN, Roger, 6130 Willisau (CH); DENK, Andre, 16909 Wittstock/Dosse (DE); KALWA, Norbert, Dr., 32805 Horn-Bad Meinberg (DE)
(74) Vertreter: Maikowski & Ninnemann Patentanwälte Partnerschaft mbB

(56) Entgegenhaltungen:
- EP-A2- 1 750 128
- EP-B1- 2 808 636
- WO-A1-99/45367
- US-A1- 2005 208 285
- US-A1- 2007 039 678
- US-A1- 2007 222 100
- US-B1- 6 414 312
- LI W ET AL: "Rapid and nondestructive analysis of quality of prepreg cloth by near-infrared spectroscopy", COMPOSITES SCIENCE AND TECHNOLOGY, ELSEVIER, UK, Bd. 65, Nr. 11-12, 16. März 2005 (2005-03-16), Seiten 1668-1674, XP027688165, ISSN: 0266-3538 [gefunden am 2005-09-01]
- ANDREAS KANDELBAUER ET AL: "Über die Eigenschaften eines Melamin-Harnstoff- Formaldehyd Harzes für die Dekorpapierbeschichtung", HOLZ ALS ROH- UND WERKSTOFF., Bd. 68, Nr. 1, 13. Juni 2009 (2009-06-13), Seiten 63-75, XP055311452, DE ISSN: 0018-3768, DOI: 10.1007/s00107-009-0352-y
- Tom Scherzer ET AL: "Process Control of UV and EB Curing of Acrylates by In-line NIR Reflection Spectroscopy", 2004 UV & EB Technical Conference Proceedings, 30 April 2004 (2004-04-30), XP055310210, Retrieved from the Internet: URL:http://www.radtechmembers.org/archive- proceedings/2004/papers/064.pdf [retrieved on 2016-10-12]

## Beschreibung

Die vorliegende Erfindung betrifft ein Verfahren zur Bestimmung des Aushärtungsgrades von mindestens einer auf einer Holzwerkstoffplatte angeordneten wärmehärtbaren formaldehydhaltigen Harzschicht nach Anspruch 1 und die Verwendung eines NIR-Detektors zur Durchführung des Verfahrens nach Anspruch 13.

### Beschreibung

Holzwerkstoffplatten als Trägermaterialien werden in den verschiedensten Bereichen eingesetzt und sind weit verbreitet. So sind Holzwerkstoffplatten unter anderem aus der Verwendung als Fußbodenpaneele, z.B. in Form von Laminatböden, bekannt. Derartige Werkstoffplatten werden üblicherweise aus Holzfasern, Holzspänen oder Strands hergestellt. Für den Einsatz von derartigen Werkstoffplatten z.B. als Laminatböden oder Wandpaneele ist eine Weiterveredlung der Holzwerkstoffplatten vorteilhaft und notwendig. Im Falle von Laminatböden werden z.B. aus Holzfasern hergestellte HDF-Platten mit vielfältigen Dekoren versehen.
Hierzu können dekorative harzimprägnierte Papiere auf die Oberfläche der Werkstoffplatte aufgepresst werden oder Schichtstoffe, die zunächst aus mehreren harzimprägnierten Papieren zu einem Laminat verpresst werden, auf einen Holzwerkstoff aufzukleben. Auch können Dekore im Direktdruck auf die Holzwerkstoffplatte aufgebracht werden, die anschließend mit einem Harz oder Lack versiegelt werden.
Das Harz, das für diese dekorativen Oberflächen eingesetzt wird, ist üblicherweise ein Melaminharz. Dies wird in einer Kondensationsreaktion aus Melamin und Formaldehyd hergestellt.
Es ist bekannt, dass die Bestimmung der Aushärtung eines Melaminharzes, welches in einem Pressprozess ausgehärtet worden ist, ein wichtiges Instrument zur Bestimmung der Oberflächenqualität ist. Eine zu starke Aushärtung führt zu einer Versprödung, die bei weiteren Bearbeitungsschritten (Sägen, Bohren, Fräsen usw.) zu Ausrissen führen kann. Eine zu geringe Aushärtung kann zu schlechten Oberflächeneigenschaften bezüglich der Widerstandsfähigkeit gegenüber Chemikalien und/oder Verschleiß führen. Dies gilt umso mehr, wenn die Wahrscheinlichkeit, dass die Oberfläche einer spezifischen Belastung häufiger ausgesetzt sein wird, größer ist. Als Beispiele seien hier nur eine Arbeitsfläche in einem Labor genannt, die häufiger mit aggressiven Chemikalien in Kontakt kommt oder eine Fußbodenoberfläche, die durch Begehen mechanisch stark belastet wird.
Die Bestimmung der Aushärtung einer Harzschicht wurde früher bevorzugt mit Hilfe von sogenannten Kitonfarbstoffen durchgeführt. Dabei wurde die Probe eine definierte Zeit in einer angesäuerten Lösung des Farbstoffes in Wasser gekocht. Der Grad der Verfärbung gab einen Hinweis auf die Aushärtung (wenig Anfärbung = starke Aushärtung, starke Anfärbung = niedrige Aushärtung). Allerdings musste in jedem Fall eine Probe aus dem zu analysierenden Muster herausgeschnitten werden und gekocht werden.
Später ging man dazu über die Aushärtung über den sogenannten Säuretest zu bestimmen. Dabei wird die Oberfläche für einen definierten Zeitraum mit einer verdünnten Mineralsäure (4 molare Salzsäure) beansprucht. Anschließend wird die Glanzgrad- und/oder Farbänderung beurteilt. Dabei ist die Aushärtung umso stärker je weniger Glanzgrad-/Farbverlust zu beobachten ist. Allerdings braucht auch diese Prüfung Zeit, was dazu führt, dass bis zum Vorliegen des Prüfergebnisses nicht qualitätsgerechte Produkte hergestellt werden. Auch hier muss zunächst eine Probe aus einem größeren Platte herausgeschnitten werden (Format: bis zu 2800 x 2070 mm). Die Platte aus der die Probe herausgeschnitten worden ist, muss wegen des Ausschnittes der zweiten Wahl bzw. dem Ausschuss zugeführt werden. Zudem ist der Umgang mit einer halbkonzentrierten Mineralsäure nicht ganz unproblematisch. Zudem zeigen sich auch gewisse Abhängigkeiten des Ergebnisses von der Farbe des verwendeten Dekorpapiers oder der Versprödung der Melaminharz-Oberfläche. Dies erschwert die Beurteilung insbesondere bei sehr hellen Dekoren und matten Oberflächenausführungen. Die Prüfung stellt aber lediglich nur eine punktuelle Prüfung dar. Eine verlässliche Aussage über die Aushärtung der gesamten Produktionscharge kann nicht gemacht werden. Auch die Optimierung der Presszeiten kann nur sehr langsam vorgenommen werden, da die Prüfung der Muster aus der Produktion incl. der Probenahme nahezu eine Stunde braucht. Dies führt dazu, dass bis ein Ergebnis vorliegt, möglicherweise bereits die Produktionscharge fertig produziert ist.

Die Veröffentlichung von T. Scherzer und R. Mehnert, "Process Control of UV and EB Curing of Acrylates by in-line NIR Reflection Spectroscopy", RadTech UV & EB Technical Conference Proceedings, 2004, beschreibt ein auf spektroskopischen Reflexionsmessungen im nahinfraroten Spektralbereich beruhendes Verfahren zur Bestimmung des Aushärtungsgrades von Acrylat-Schichten auf verschiedenen Trägermaterialien, u. a. Holzwerkstoffplatten. Dabei wird das Integral über den Acrylat-Peak bei 1620 nm der gehärteten Schicht ins Verhältnis zum entsprechenden Integral einer ungehärteten Schicht gesetzt.

Die konventionellen Methoden zur Bestimmung des Aushärtungsgrades eines auf einer Werkstoffplatte aufgetragenen Harzes weisen somit eine Reihe von Nachteilen auf: Zeitverlust, Gesundheitsgefährdungen durch Säure, nicht in jedem Fall sichere und wiederholbare Ergebnisse, eine invasive die Holzwerkstoffplatte zerstörende Prüfung, hohe Kosten und eine geringe bis keine Flexibilität.

Der Erfindung liegt daher die technische Aufgabe zu Grunde, ein Verfahren zu entwickeln, das schnell und wiederholbare Aussagen über die Aushärtung einer auf einer Werkstoffplatte aufgetragenen Polymerschicht, wie einer Melaminharzschicht, ermöglicht. Das Verfahren sollte dabei möglichst zerstörungsfrei funktionieren und auf den Einsatz von toxischen Chemikalien verzichten. Auch sollten Effekte, die durch die Oberflächenstruktur oder durch eine Versprödung hervorgerufen werden, die Messung nicht stören.

Die gestellte Aufgabe wird erfindungsgemäß durch ein Verfahren mit den Merkmalen des Anspruchs 1 gelöst.

Demnach wird ein Verfahren zur Bestimmung des Aushärtungsgrades von mindestens einer auf einer Trägerplatte angeordneten Polymerschicht bereitgestellt. Das vorliegende Verfahren umfasst dabei die folgenden Schritte:
- Aufnehmen von mindestens einem NIR-Spektrum der auf der mindestens einen Trägerplatte angeordneten Polymerschicht nach dem Aushärten der Polymerschicht mit der Trägerplatte unter Verwendung von mindestens einem NIR-Detektor in einem Wellenlängenbereich zwischen 500 nm und 2500 nm, bevorzugt zwischen 700 nm und 2000 nm, insbesondere bevorzugt zwischen 900 nm und 1700 nm;
- Bestimmen des Aushärtungsgrades der mindestens einen Polymerschicht durch Vergleich des für die mindestens eine Polymerschicht ermittelten NIR-Spektrums mit mindestens einem für mindestens eine Referenzprobe der mindestens einen Polymerschicht mit bekanntem Aushärtungsgrad ermittelten NIR-Spektrums mittels einer multivarianten Datenanalyse (MDA),
- wobei das mindestens eine für die mindestens eine Referenzprobe ermittelte NIR-Spektrum mit bekanntem Aushärtungsgrad der mindestens einen Polymerschicht nach dem Aushärten der Polymerschicht mit der Trägerplatte unter Verwendung desselben NIR-Detektors in einem Wellenlängenbereich zwischen 500 nm und 2500 nm, bevorzugt zwischen 700 nm und 2000 nm, insbesondere bevorzugt zwischen 900 nm und 1700 nm vorher, d.h. vor der Aufnahme des NIR-Spektrums der zu vermessenden Probe bzw. Polymerschicht, bestimmt wurde. Erfindungsgemäß handelt es sich bei der Trägerplatte um eine Holzwerkstoffplatte und bei der Polymerschicht um eine wärmehärtbare formaldehydhaltige Harzschicht, wobei die Bestimmung des Aushärtungsgrades nach dem Verpressen der formaldehydhaltigen Harzschicht mit der Holzwerkstoffplatte erfolgt und die multivariate Datenanalyse über den gesamten aufgenommenen Spektralbereich des NIR-Spektrums durchgeführt wird.

Das vorliegende Verfahren ermöglicht demnach die Bestimmung des Aushärtungsgrades einer auf einer Trägerplatte angeordneten Polymerschicht z.B. in Form eines Harzes, wobei der Aushärtungsgrad insbesondere eine Funktion des Kondensationsgrades bzw. Polymerisationsgrades bzw. Vernetzungsgrades des verwendeten Polymers darstellt. Zudem ermöglicht das vorliegende Verfahren auch eine kontinuierliche Messung, so dass auf Änderungen in den Vorprodukten (z.B. Plattentemperatur, neue Charge, Imprägnate usw.) oder in den Produktionsbedingungen (z.B. Temperatur, Thermoöl der Presse, Presszeiten usw.) rechtzeitig reagiert werden kann.
Das vorliegende Verfahren der Bestimmung des Aushärtungsgrades einer auf einer Trägerplatte angeordneten Polymerschicht mit Hilfe NIR-Spektroskopie bietet eine Alternative zu den oben beschriebenen zeitaufwendigen und kostenintensiven Prüfungen des Aushärtungsgrades. So erfolgt die Bestimmung des Aushärtungsgrades unter Verwendung eines NIR-Messgerätes in weniger als eine Minute, was einen hohen Probendurchsatz ermöglicht. Zudem ist die Messung zerstörungsfrei. Die Messergebnisse werden in elektronischer Form automatisch abgespeichert und stehen für mögliche Weiterwendung zur Verfügung. Des Weiteren können Proben von mehreren Anlagen in kurzer Zeit auf den Aushärtungsgrad geprüft werden.
Ein wesentlicher Aspekt ist, dass der Aushärtungsgrad der auf der Trägerplatte vorgesehenen Polymerschicht nach dem Aushärten der Polymerschicht, d.h. insbesondere nach dem Verpressen der mindestens einen Polymerschicht mit der Trägerplatte bestimmt wird.
Unter Verwendung eines NIR-Detektors wird mit Hilfe der NIR-Strahlung ein NIR-Spektrum der auf der Trägerplatte aufgetragenen bzw. vorgesehenen Polymerschicht erzeugt, das für die Polymerschicht spezifische Peaks aufweist. Die NIR-Strahlung wird während der Messung auf die zu analysierende Probe geleitet, wo sie mit den Bestandteilen der Polymerschicht Probe wechselwirkt und reflektiert oder gestreut wird. Ein NIR-Detektor fängt die reflektierte NIR-Strahlung auf und erzeugt ein NIR-Spektrum, das die chemischen Informationen der Probe beinhaltet. Bei dieser Messung werden in einer Sekunde Dutzende NIR-Messungen durchgeführt, sodass auch eine statistische Absicherung der Werte gewährleistet wird.

Das vorliegende Verfahren zur Bestimmung des Aushärtungsgrades einer Polymerschicht auf einer Trägerplatte unter Verwendung eines NIR-Detektors nutzt den Umstand aus, dass die NIR-Strahlung nicht durch die gesamte Werkstoffplatte, das heißt, durch Polymerschicht und Trägerplatte, hindurch dringt, sondern an der Oberfläche der Werkstoffplatte reflektiert wird. Die NIR-Strahlung dringt demnach im vorliegenden Verfahren lediglich und ausschließlich durch die Polymerschicht z.B. Harzschicht durch und wird von der Oberfläche der Holzwerkstoffplatte reflektiert. Die reflektierte NIR-Strahlung wird von dem NIR-Detektor erfasst und das ermittelte NIR-Spektrum wird zur Bestimmung des Aushärtungsgrades verwendet.
Das NIR-Spektrum einer z.B. mit Melamin-Formaldehyd-Harz beschichteten Probe weist eine deutliche breite Absorptionsbande mit einem Absorptionsmaximum bei ca. 1490 nm auf. Diese Bande entspricht der ersten Oberschwingung von N-H-Gruppen. Bei ca. 1445 nm ist eine erste Oberschwingung der O-H-Bindung des Wassers erkennbar. Die Absorptionsbande bei 1590 nm entspricht der 1. Oberschwingung der O-H-Gruppen von Cellulose der Holzfaser. Wegen der Überlappung der drei genannten Absorptionsbanden erscheint die Wasserbande als linke Schulter und die Cellulose-Bande als rechte Schulter der breiten Bande. Des Weiteren erkennt man eine Absorptionsbande bei 1210 nm. Diese Bande entspricht der 2. Oberschwingungen der C-H-Bindungen.

Ein Vergleich und die Interpretation der NIR-Spektren erfolgt erfindungsgemäß über den gesamten aufgenommenen Spektralbereich. Dies wird mit der multivariaten Datenanalyse MDA durchgeführt. Bei multivariaten Analysemethoden werden typischerweise mehrere statistische Variablen zugleich untersucht. Hierzu wird die in einem Datensatz enthaltene Zahl von Variablen reduziert, ohne gleichzeitig die darin enthaltene Information zu mindern.
Im vorliegenden Fall erfolgt die multivariate Datenanalyse über das Verfahren der Partial Least Squares (PLS) Regression, wodurch ein geeignetes Kalibrationsmodell erstellt werden kann. Die Auswertung der gewonnenen Daten wird bevorzugt mit einer geeigneten Analysesoftware vorgenommen wie z.B. mit der Analysesoftware SIMCA-P der Firma Umetrics AB oder The Unscrambler der Firma CAMO.
In einer ersten Ausführungsvariante des vorliegenden Verfahrens wird der Aushärtungsgrad der mindestens einen Polymerschicht nach dem Aushärten bzw. Verpressen der Polymerschicht mit der Trägerplatte innerhalb einer Produktionslinie der Werkstoffplatte bestimmt (In-Line-Messung). In dieser In-Line-Variante wird demnach der Aushärtungsgrad im laufenden Produktionsprozess bestimmt. Dies ermöglicht eine direkte Steuerung und Eingriff in den Produktionsprozess.

Im Falle der In-Line NIR-Messung in der Produktionslinie wird bevorzugt ein mobiles NIR-Messgerät (wie z.B. das Gerät DA 7400 der Firma Perten) verwendet. Bei der In-Line-Messung kann der Messkopf, der die Spektren aufnimmt dabei an einer beliebigen Stelle in der Produktionslinie positioniert werden. Er liefert pro Platte/Laminat usw. mehrere Messwerte. Durch ein Traversieren des Messkopfes über eine Plattenbreite können auch hier Unterschiede detektiert werden. Damit können anders als beim oben beschriebenen konventionellen "Säuretest" während einer Produktion eine Vielzahl von Messwerten erzeugt werden. Auch Änderungen in der Aushärtung durch Temperaturänderungen in der Presse, durch Änderungen in den Imprägnaten usw. werden zeitnah detektiert und können durch Anpassung der Prozessparameter usw. abgefangen werden. Durch die Möglichkeit den Messkopf über die zu analysierenden Platten traversieren zu lassen, können auch Produktionsprobleme besser und schneller analysiert werden. Wenn z. B. in einer Presse in verschiedenen Bereichen die Durchwärmung der Heizplatten unterschiedlich ist, kann dies zu unterschiedlichen Aushärtungen führen. Dies kann nun schnell festgestellt werden. Mit Hilfe des Säuretests ist dies nur schwer oder gar nicht möglich.

In einer zweiten Ausführungsvariante des vorliegenden Verfahrens wird der Aushärtungsgrad der mindestens einen Polymerschicht nach dem Aushärten bzw. Verpressen der Polymerschicht mit der Trägerplatte außerhalb einer Produktionslinie der Werkstoffplatte bestimmt (Off-Line-Messung). In dieser Variante wird demnach eine fertig verpresste und ausgehärtete Werkstoffplatte aus der Produktionslinie entnommen bzw. ausgeschleust und off-line z.B. in einem separaten Labor im Rahmen einer routinemäßigen Qualitätskontrolle vermessen.

Im Falle der Off-Line NIR-Messung außerhalb der Produktionslinie können sowohl mobile als auch stationäre NIR-Messgeräte (wie z.B. das Gerät DA 7250 der Firma Perten) verwendet werden. Die Verwendung von mobilen NIR-Messgeräten ermöglicht zudem eine Prüfung der Aushärtung im eingebauten Zustand der Holzwerkstoffplatte (z.B. Arbeitsplatte, Fussboden usw.) Dies spart Zeit und Kosten und vermeidet die Zerstörung von mängelfreien Produkten. Die Alternative bestände heute im Ausbau eines Bauteils oder Fussbodenelements mit anschließender zerstörender Untersuchung im Labor.

In einer weiteren dritten Ausführungsvariante des vorliegenden Verfahrens wird der Aushärtungsgrad der mindestens einen Polymerschicht nach dem Aushärten bzw. Verpressen der Polymerschicht mit der Trägerplatte innerhalb und außerhalb einer Produktionslinie der Werkstoffplatte bestimmt (Kombination von In-Line- und Off-Line-Messung). In dieser dritten Verfahrensvariante erfolgt somit eine Kombination von In-Line (innerhalb der Produktionslinie) und Off-Line (außerhalb der Produktionslinie z.B. als Labormessung). Vorteilhaft ist dabei, dass die mit der In-Line-Messung innerhalb des laufenden Produktionsprozesses permanent möglichen steuernden Eingriffe mit der nachgeschalteten Labormessung eine Art Gegenprüfung/Verifizierung erfahren. Dies ist insbesondere in komplexen Prozessen von herausragender Bedeutung.

In einer bevorzugten Ausführungsform des vorliegenden Verfahrens umfasst die Referenzprobe mit bekanntem Aushärtungsgrad der Polymerschicht eine auf einer Trägerplatte aufgetragene Polymerschicht (bzw. eine mit der Trägerplatte verpresste Polymerschicht), wobei Trägerplatte und Polymerschicht der Referenzprobe gleichartig zu der zu vermessenden Probe aus Trägerplatte und Polymerschicht sind; d.h. die Zusammensetzung der zu vermessenden Probe und der Referenzprobe sind gleichartig.

In einer weiteren Ausführungsform des vorliegenden Verfahrens erfolgt die Bestimmung des Aushärtungsgrades der mindestens einen Polymerschicht der mindestens einen Referenzprobe nach dem Aushärten bzw. Verpressen der Polymerschicht mit der Trägerplatte anhand von mindestens einer der ausgehärteten Referenzprobe entnommenen Einzelprobe. Dabei ist es bevorzugt, wenn der Aushärtungsgrad der Polymerschicht der Referenzprobe anhand von mindestens einer, bevorzugt mindestens zwei, drei, vier oder mehreren, der Referenzproben entnommenen Einzelproben gemäß des Säuretests mit 4 M Salzsäure bestimmt wird.

Die Kalibrierung erfolgt durch Aufnahme eines NIR-Spektrums von einer ausgehärteten Referenzprobe, die anschließend auf die Aushärtung mittels Säuretests geprüft wird. Hierzu werden verschiedene Referenzproben mit unterschiedlich ausgehärteten Polymerschichten bereitgestellt, wobei der Härtungsgrad durch unterschiedliche Presszeiten und Presstemperaturen variiert werden kann.

Bei der Kalibrierung für eine In-Line-Messung erfolgt die Aufnahme der NIR-Spektren wenige Sekunden nach dem Pressvorgang direkt an der Produktionslinie. Anschließend wird die Platte an den Stellen, wo die NIR-Spektren aufgenommen wurden, mittels eines konventionellen Härtungstestes, wie dem Säure-Test, auf die Aushärtung geprüft. Aus den Ergebnissen des Säuretest für eine Platte wird ein Mittelwert gebildet und dem Spektrum dieser Platte zugeordnet.

Bei der Kalibrierung für eine Off-Line-Messung werden aus einer verpressten Platten mehrere Proben für die Prüfung der Aushärtung entnommen. Von den Proben werden mit dem NIR-Gerät Spektren ausgenommen. Nach der Aufnahme der NIR-Spektren werden die Proben auf die Aushärtung mittels Säure geprüft.

Auf dieser Weise werden mehrere Referenzspektren von unterschiedlich ausgehärteten Platten mit z.B. verschiedenen Farbdekoren (für Kalibrierung der In-Line- und/oder Off-Line-Messung) aufgenommen.

Aus den jeweils ermittelten Werten des Aushärtungsgrades wird ein Mittelwert gebildet, welcher dem jeweiligen NIR-Spektrum zugeordnet wird. Auf diese Weise werden mehrere Referenzspektren von beschichteten Platten mit farblich unterschiedlichen Dekoren und unterschiedlichen Härtungsgraden aufgenommen. Aus den Referenzspektren wird ein Kalibrationsmodell erstellt, welches zur Bestimmung des Aushärtungsgrades einer unbekannten Probe genutzt werden kann. Bei der (In-Line oder Off-Line) NIR-Messung wird dann direkt das Ergebnis des Säuretests bzw. Qualität der Aushärtung vorhergesagt.

Bei farblich sehr unterschiedlichen Dekoren es ist auch denkbar jeweils Cluster von Dekoren zu bilden, die eine ähnliche Farbeinteilung aufweisen. Die Erstellung des Kalibrationsmodells erfolgt mittels multivariater Datenanalyse (MDA), wobei ein Vergleich und die Interpretation der NIR-Spektren sinnvollerweise über den gesamten aufgenommenen Spektralbereich vorgenommen wird. Bei multivariaten Analysemethoden werden typischerweise mehrere statistische Variablen zugleich untersucht. Hierzu wird die in einem Datensatz enthaltene Zahl von Variable reduziert, ohne gleichzeitig die darin enthaltene Information zu mindern.

Im vorliegenden Fall erfolgt die multivariate Datenanalyse über das Verfahren der Partial Least Squares (PLS-Regression), wodurch ein geeignetes Kalibrationsmodell erstellt werden kann. Die Auswertung der gewonnenen Daten wird bevorzugt mit einer geeigneten Analysesoftware vorgenommen, wie z.B. mit der Analysesoftware SIMCA-P der Firma Umetrix AB oder The Unscrambler der Firma CAMO. Dieses Programm ermöglicht unter anderem durch speziellen Vorbehandlungstechniken der spektralen Daten verschiedenen Störfaktoren auf die Messung solche wie Oberflächenbeschaffenheit der Proben, infrarot-inaktive Füllstoffe in der Beschichtung oder unterschiedlichen Farben der Proben und weitere, zu minimieren.
In einer Ausführungsform des vorliegenden Verfahrens ist die mindestens eine Polymerschicht ausgewählt aus der Gruppe enthaltend mindestens eine wärmehärtbare Harzschicht.
Die zu vermessende Polymerschicht kann direkt auf der Oberfläche einer unbehandelten oder einer mechanisch (z.B. mittels Schleifen) behandelten Trägerplatte angeordnet sein. Es ist aber möglich, dass die zu vermessende Polymerschicht auf einer pigmentierten Schicht (z.B. Grundierungsschicht), Primerschicht (UV- oder ESH-Spachtel) oder Dekorschicht (Direktdruck oder Dekorpapierlage) vorgesehen ist. Erfindungsgemäß wird eine wärmehärtbare formaldehydhaltige Harzschicht als Polymerschicht verwendet. Diese kann insbesondere aus einem Melamin-Formaldehyd-Harz, einem Melamin-Harnstoff-Formaldehyd-Harz oder einem Harnstoff-Formaldehyd-Harz bestehen.
Die mindestens eine wärmehärtbare Harzschicht kann zudem als Flüssigoverlay oder als Imprägnat einer Papierlage vorliegen.
Im Falle eines Flüssigoverlays wird das flüssige, wärmehärtbare Harz in einer oder mehreren Lagen auf die Trägerplatte aufgebracht und anschließend ausgehärtet. Entsprechend kann die mindestens eine als Overlay verwendete wärmehärtbare Harzschicht mindestens zwei Lagen, bevorzugt mindestens drei nacheinander aufgetragene Lagen umfassen. Dabei ist die Auftragsmenge der Lagen gleich oder verschieden und kann jeweils zwischen 1 und 50 g/m², bevorzugt zwischen 2 und 30 g/m², insbesondere zwischen 5 und 15 g/m², betragen.
Die als Overlay verwendete wärmehärtbare Harzschicht kann zudem abriebfeste Partikel, natürliche und/oder synthetische Fasern und auch weitere Additive enthalten. Als abriebfeste Partikel können Aluminiumoxide (z. B. Korund), Borcarbide, Siliziumdioxide (z. B. Glaskugeln), Siliziumcarbide verwendet werden. Als natürliche oder synthetische Fasern ist die Verwendung von Holzfasern, Zellulosefasern, partiell gebleichte Zellulosefasern, Wollfasern, Hanffasern und organische oder anorganische Polymerfasern vorstellbar. Als weitere Additive können Flammschutzmittel und/oder lumineszierende Stoffe zugegeben werden.

Ein Verfahren zum Aufbringen eines Flüssigoverlays mit Additiven in mehreren Lagen ist unter anderem in der EP 233 86 93 A1 beschrieben. In dem darin beschriebenen Beispiel erfolgt zunächst nach Reinigung der Oberfläche einer Holzwerkstoffplatte das Aufbringen einer ersten oberen, abriebfeste Partikel (z.B. Korundpartikel) enthaltenden Harzschicht auf eine Holzwerkstoffplatte als Trägerplatte, ein Trocknen dieser ersten Harzschicht, z.B. bis auf eine Restfeuchte von 3-6 Gew%, anschließendes Aufbringen einer zweiten, Zellulosefasern enthaltenden Harzschicht auf die Holzwerkstoffplatte, wiederholtes Trocknen bzw. Antrocknen der zweiten Harzschicht, z.B. bis auf eine Restfeuchte von 3-6 Gew%, Aufbringen einer mindestens dritten Glaspartikel enthaltenden Harzschicht auf die Holzwerkstoffplatte mit anschließendem Antrocknen der dritten Harzschicht, z.B. ebenfalls auf eine Restfeuchte von 3-6 Gew% und ein finales Verpressen des Schichtaufbaus unter Druck- und Temperatureinfluss.
Im Falle einer mit dem wärmehärtbaren Harz imprägnierten Papierlage kann diese eine Overlay-Papierlage, Dekorpapierlage oder auch ein Gegenzugpapier sein.
Die mittels des vorliegenden Verfahrens zu vermessende mindestens eine Polymerschicht kann eine Dicke zwischen 10 und 150 µm, bevorzugt zwischen 20 und 100 µm, insbesondere bevorzugt zwischen 30 und 80 µm aufweisen. Erfindungsgemäß wird als Trägerplatte eine Holzwerkstoffplatte, insbesondere eine mitteldichte Faser (MDF), hochdichte Faser (HDF), Grobspan (OSB) oder Sperrholzplatte, oder eine Holz-Kunststoff-Platte, insbesondere eine Wood Plastic Composite (WPC)-Platte verwendet. Wie oben bereits erwähnt, können zwischen der Trägerplatte und der mindestens einen Polymerschicht mindestens eine Grundierungsschicht und/oder mindestens eine Dekorschicht angeordnet sein.
Die dabei bevorzugt verwendete Grundierungsschicht umfasst eine Zusammensetzung aus Kasein als Bindemittel und anorganische Pigmente, insbesondere anorganische Farbpigmente. Als Farbpigmente können in der Grundierungsschicht weiße Pigmente wie Titandioxid verwendet werden oder aber auch weitere Farbpigmente, wie Calciumcarbonat, Bariumsulfat oder Bariumcarbonat. Die Grundierung kann neben den Farbpigmenten und dem Kasein noch Wasser als Lösemittel enthalten. Es ist ebenfalls bevorzugt, wenn die aufgetragene pigmentierte Grundschicht aus mindestens einer, bevorzugt aus mindestens zwei, insbesondere bevorzugt aus mindestens vier nacheinander aufgetragenen Lagen bzw. Aufträgen besteht, wobei die Auftragsmenge zwischen den Lagen bzw. Aufträgen gleich oder verschieden sein kann.

Vorliegend kann in einer weiteren Ausführungsform des Verfahrens im Falle des Auftrages von mindestens einer Grundierungsschicht auf die Trägerplatte anschließend auf die selbige mindestens eine Primerschicht, z.B. in Form eines UV- oder ESH-Spachtels aufgetragen werden.

Die bereits oben erwähnte Dekorschicht kann mittels Direktdruck aufgetragen werden. Im Falle eines Direktdruckes erfolgt der Auftrag einer wasserbasierten, pigmentierten Druckfarbe im Tiefdruck- oder im Digitaldruckverfahren, wobei die wasserbasierte pigmentierte Druckfarbe in mehr als einer Schicht auftragbar ist, z.B. in Form von zwei bis zehn Schichten, bevorzugt drei bis acht Schichten.

Im Falle des Direktdrucks erfolgt der Auftrag der mindestens einen Dekorschicht wie erwähnt mittels eines analogen Tiefdruck- und/oder eines Digitaldruckverfahrens. Das Tiefdruckverfahren ist eine Drucktechnik, bei der die abzubildenden Elemente als Vertiefungen einer Druckform vorliegen, die vor dem Druck eingefärbt wird. Die Druckfarbe befindet sich vornehmlich in den Vertiefungen und wird aufgrund des Anpressdruckes der Druckform und von Adhäsionskräften auf den zu bedruckenden Gegenstand, wie z.B. eine Holzfaserträgerplatte, übertragen. Hingegen wird beim Digitaldruck das Druckbild direkt von einem Computer in eine Druckmaschine, wie z.B. einen Laserdrucker oder Tintenstrahldrucker übertragen. Dabei entfällt die Verwendung einer statischen Druckform. In beiden Verfahren ist die Verwendung von wässrigen Farben und Tinten oder farbgebender Mittel auf UV-Basis möglich. Ebenfalls ist es vorstellbar, die genannten Drucktechniken aus Tief- und Digitaldruck zu kombinieren. Eine geeignete Kombination der Drucktechniken kann zum einen unmittelbar auf der Trägerplatte bzw. der zu bedruckenden Schicht erfolgen oder auch vor dem Drucken durch Anpassung der verwendeten elektronischen Datensätze.

Die mit einer Polymerschicht in Form einer wärmehärtbaren Harzschicht versehene Trägerplatte kann ebenfalls mit einer 3D-Prägestruktur versehen werden, wobei die Oberflächenstruktur bevorzugt in einer Kurztaktpresse optional synchron zum Dekor aufgeprägt wird. Die 3D-Struktur wird bevorzugterweise mittels geeigneter Prägestrukturen eingeprägt bzw. eingedrückt. Die Strukturierungen können unter Verwendung von strukturierten Walzen, strukturierten Kalandern oder strukturierten Pressblechen erfolgen.

Im Falle der ebenfalls oben benannten Verwendung einer mit einem wärmehärtbaren Harz imprägnierten Papierlage, wie z.B. einer Dekorpapierlage, wird diese unter Verwendung von mindestens einem Klebstoff, insbesondere einem Polyurethan-Klebstoff oder einem thermoplastischen Klebstoff, auf die Trägerplatte aufkaschiert. Dies passiert üblicherweise in einer Kaschieranlage.

In einer weitergehenden Ausführungsform können (bevorzugt im Anschluss an das Aufkaschieren der imprägnierten Papierlage auf die Trägerplatte) auf die mindestens eine imprägnierte Dekorpapierlage mindestens eine imprägnierte Overlaypapierlage angeordnet werden und der Aufbau aus Trägerplatte, Dekorpapierlage und Oberlaypapierlage kann folgend mit mindestens einem auf der gegenüberliegenden Seite der Trägerplatte vorgesehen Gegenzug in einer Kurztaktpresse verpresst werden.

Das vorliegende Verfahren ermöglicht somit die Bestimmung des Aushärtungsgrades einer Holzwerkstoffplatte mit folgenden Schichtaufbauten:
a) Holzfaserträgerplatte-Grundierungsschicht-Primerschicht-Dekorschicht-wärmehärtbare Harzschicht (z.B. Melamin-Formaldehyd-Harzschicht), oder
b) Holzfaserträgerplatte-Klebstoff-mit wärmehärtbaren Harz imprägnierte Dekorpapierlageggf. mit wärmehärtbaren Harz imprägniertes Overlaypapier.

Das vorliegende Verfahren zur Bestimmung des Aushärtungsgrades einer auf einer Trägerplatte angeordneten Polymerschicht wird in einer Vorrichtung bzw. Produktions- oder Fertigungslinie zur Herstellung von Werkstoffplatten durchgeführt, die mindestens eine Vorrichtung zum Aufbringen von mindestens einer Polymerschicht auf eine Trägerplatte, wie z.B. eines Flüssigoverlays oder einer mit einer Polymerschicht imprägnierten Papierlage, mindestens eine Vorrichtung zum Verpressen der Polymerschicht mit der Trägerplatte, und mindestens einen NIR-Detektor zur Durchführung des erfindungsgemäßen Verfahrens umfasst, wobei
a) mindestens ein NIR-Detektor innerhalb der Produktionslinie in Verarbeitungsrichtung nach der Auftragsvorrichtung und der Pressvorrichtung vorgesehen ist; und/oder
b) mindestens ein NIR-Detektor außerhalb der Produktionslinie, vorgesehen ist.

In der ersten Variante (In-Line) ist der NIR-Detektor somit Teil der Produktionslinie, während in der zweiten Variante (Off-Line) der NIR-Detektor separat von der Produktionslinie z.B. in einem geeigneten Prüflabor vorgesehen ist.

Eine Kombination dieser zwei Varianten ist ebenfalls denkbar, wonach entsprechend mindestens ein erster NIR-Detektor innerhalb der Produktionslinie und mindestens ein zweiter NIR-Detektor außerhalb der Produktionslinie vorgesehen sein können.

Die Erfindung wird nachfolgend unter Bezugnahme auf die Figuren der Zeichnungen an einem Ausführungsbeispiel näher erläutert. Es zeigen:

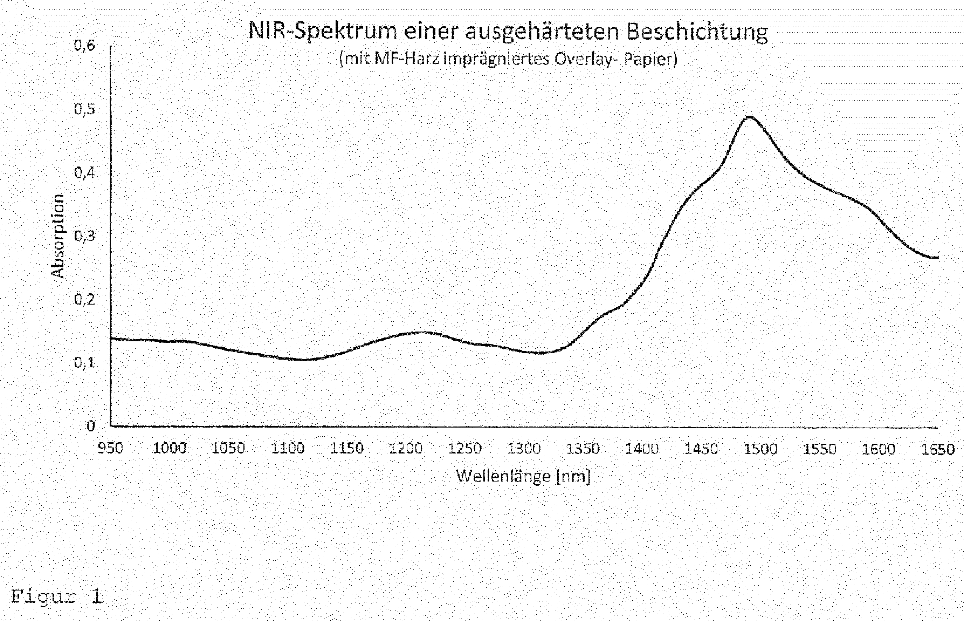

- Figur 1: ein NIR-Spektrum einer ausgehärteten Beschichtung aus einem imprägnierten Overlay-Papier, und
- Figur 2: ein Diagramm eines PLS-Kalibrationsmodell.

### Ausführungsbeispiel 1: Erstellen einer Referenzprobe und Kalibrierung

Die Kalibrierung erfolgt durch Aufnahme eines NIR-Spektrums von einer ausgehärteten Probe, die anschließend auf die Aushärtung mittels Säuretests geprüft wird, und wie folgt durchgeführt wird.

Mit verschiedenen Dekoren bedruckten HDF-Platten (207 cm x 280 cm) werden an der Beschichtungsanlage mittels Auftragswalze von oben mit flüssigem Melamin-Formaldehyd-Harz oder mit einem mit MF-Harz imprägniertem Overlay-Papier beschichtet und anschließend in einer Kurztaktpresse bei 190-210°C und 40 bar 8 bis 36 Sekunden lang gepresst. Dabei wird die Schutzschicht ausgehärtet. Durch die Variation der Presszeit und Presstemperatur werden Proben mit unterschiedlich ausgehärteten Schutzschichten erreicht.

Bei der Kalibrierung für eine In-Line-Messung erfolgt die Aufnahme der NIR Spektren wenige Sekunden nach dem Pressvorgang direkt an der Produktionslinie. Anschließend wird die Platte an den Stellen, wo die NIR-Spektren aufgenommen wurden, mittels Säuretest auf die Aushärtung geprüft. Aus den Ergebnissen des Säuretest für eine Platte wird ein Mittelwert gebildet und dem Spektrum dieser Platte zugeordnet.

Bei der Kalibrierung für eine Off-Line-Messung werden aus einer verpressten Platten mehrere 10 cm x 10 cm Proben für die Prüfung der Aushärtung entnommen. Von den Proben werden mit dem Labor NIR-Gerät Spektren ausgenommen. Nach der Aufnahme der NIR-Spektren werden die Proben auf die Aushärtung mittels Säure geprüft.

Auf dieser Weise werden mehrere Referenzspektren von unterschiedlich ausgehärteten Platten mit verschiedenen Farbdekoren (für Kalibrierung der In-Line- und/oder Off-Line-Messung) aufgenommen.

Der Säuretest wird wie folgt durchgeführt. Auf eine auf Zimmertemperatur abgekühlte Platte werden drei Tropfen 4 M HCl gegeben. Nach 25 Minuten Einwirkzeit wird die Säure mit Wasser abgespült. Anhand der optischen und haptischen Beurteilung der Oberfläche an der Einwirkstelle wird eine Aussage über die Qualität der Aushärtung getroffen.

Der Säuretest wird wie folgt ausgewertet:

**Tabelle 1**

| **Ergebnis** | **Qualität der Aushärtung** | **Oberflächenqualität** |
|---|---|---|
| 1 | überhärtet | behandelte Stelle ist nicht sichtbar und nicht spürbar |
| 2 | leicht überhärtet | |
| 3 | optimal ausgehärtet | kaum sichtbar und leicht spürbar |
| 4 | leicht untergehärtet | |
| 5 | unterhärtet | deutlich sichtbar und sehr rau |

Zur Kalibrierung wird das Ergebnis des Tests in Korrelation mit spektralen Daten gebracht. Die Erstellung des Kalibrationsmodells erfolgt mittels multivariate Datenanalyse. Dies geschieht mit einer geeigneten Analysesoftware z. B. mit The Unscrambler der Firma CAMO. Dieses Programm ermöglicht unter anderem durch speziellen Vorbehandlungstechniken der spektralen Daten verschiedenen Störfaktoren auf die Messung solche wie Oberflächenbeschaffenheit der Proben, infrarot-inaktive Füllstoffe in der Beschichtung oder unterschiedlichen Farben der Proben und weitere, zu minimieren. Der Farbeinfluss auf die NIR-Messung kann zusätzlich durch die Bildung von Dekorgruppen, die eine ähnliche Farbeinteilung aufweisen, gelöst werden

Aus den Referenzspektren wird ein Kalibrationsmodell erstellt, welches zu Ermittlung (Vorhersage) der Aushärtung einer unbekannten Probe genutzt werden kann.

Bei der (In-Line oder Off-Line) NIR-Messung wird dann direkt das Ergebnis des Säuretests bzw. Qualität der Aushärtung vorhergesagt.

### Ein Ausführungsbeispiel 2: Off-Line-Messung einer Harzbeschichtung

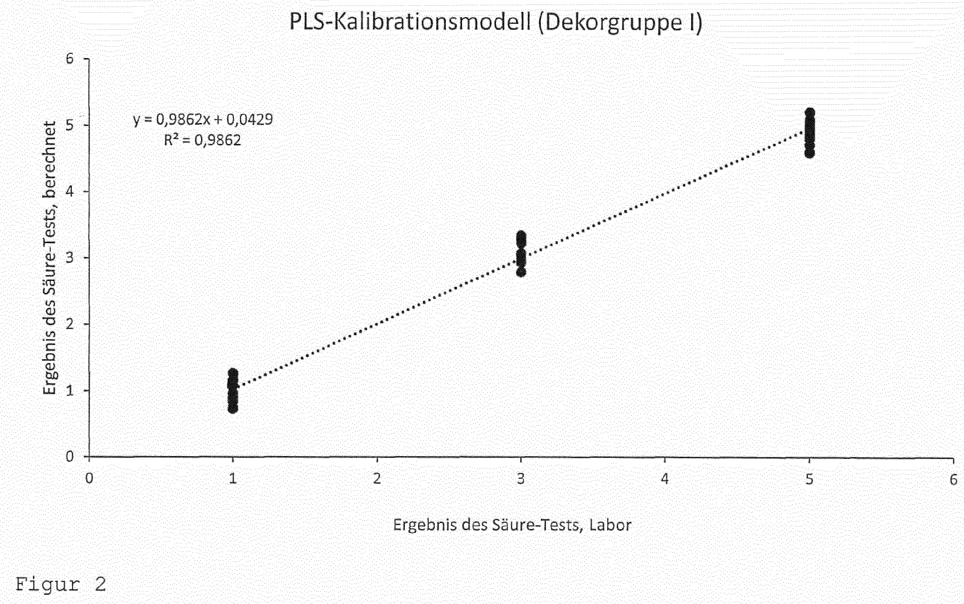

Das Diagramm der Figur 2 zeigt eine graphische Darstellung eines PLS-Kalibrationsmodells für Bestimmung der Aushärtung einer Dekorgruppe I, die Dekore mit einer ähnlichen hellen Farbeinteilung beinhaltet. Dieses Modell wird zur Bestimmung der Aushärtung von drei unbekannten Proben mit einem Dekor, das nach seiner Farbgebung zur Dekorgruppe I zugeordnet wird, genutzt. Nach dem Vermessen der drei Proben unter Verwendung eines NIR-Laborgerätes werden mit Hilfe des Kalibrationsmodells das Ergebnis des Säuretests bzw. Qualität der Aushärtung berechnet.

Die Ergebnisse der Bestimmung der Aushärtung der unbekannten Proben der Dekorgruppe I sind in Tabelle 2 zusammengefasst.

**Tabelle 2**

| **Probennummer** | **Säure-Test (Labor)** | **Säure-Test (NIR-Messung)** |
|---|---|---|
| 1 | 5 | 4,9 |
| 2 | 3 | 3,1 |
| 3 | 2 | 1,9 |

### Ausführungsbeispiel 3: In-Line-Messung einer Harzbeschichtung

Bei der In-Line-Bestimmung der Aushärtung erfolgt die NIR-Messung bzw. Aufnahme der NIR-Spektren direkt an der Produktionsanlage, gleich nach der Aushärtung der Harzbeschichtung.

Nach dem Erstellen eines PLS-Kalibrationsmodell wird es an dem Messgerät installiert. Beim Durchfahren der Proben unter dem Messkopf werden mehrere NIR-Spektren von der Beschichtung aufgenommen. Mit dem Kalibrationsmodell wird aus den aufgenommenen Spektren eine mittlere Aushärtung (Säure-Test) der Beschichtung berechnet. Auf diese Art wird jede Platte auf die Qualität der Aushärtung während der Produktion untersucht.

## Patentansprüche

1. Verfahren zur Bestimmung des Aushärtungsgrades von mindestens einer auf einer Holzwerkstoffplatte angeordneten wärmehärtbaren formaldehydhaltigen Harzschicht, nach dem Verpressen der formaldehydhaltigen Harzschicht mit der Holzwerkstoffplatte, umfassend die Schritte
- Aufnehmen von mindestens einem NIR-Spektrum der auf der Holzwerkstoffplatte angeordneten formaldehydhaitigen Harzschicht nach dem Aushärten der mindestens einen formaldehydhaltigen Harzschicht mit der Holzwerkstoffplatte unter Verwendung von mindestens einem NIR-Detektor in einem Wellenlängenbereich zwischen 500 nm und 2500 nm, bevorzugt zwischen 700 nm und 2000 nm, insbesondere bevorzugt zwischen 900 nm und 1700 nm;
- Bestimmen des Aushärtungsgrades der mindestens einen formaldehydhaltigen Harzschicht durch Vergleich des für die mindestens eine formaldehydhaltige Harzschicht ermittelten NIR-Spektrums mit mindestens einem für mindestens eine Referenzprobe der mindestens einen formaldehydhaltigen Harzschicht mit bekanntem Aushärtungsgrad ermittelten NIR-Spektrums mittels einer multivarianten Datenanalyse (MDA), wobei die multivariate Datenanalyse über den gesamten Spektralbereich des ermittelten NIR-Spektrums durchgeführt wird,
wobei das mindestens eine für die mindestens eine Referenzprobe ermittelte NIR-Spektrum mit bekanntem Aushärtungsgrad der mindestens einen formaldehydhaltigen Harzschicht nach dem Aushärten der formaldehydhaltigen Harzschicht mit der Holzwerkstoffplatte unter Verwendung desselben NIR-Detektors in einem Wellenlängenbereich zwischen 500 nm und 2500 nm, bevorzugt zwischen 700 nm und 2000 nm, insbesondere bevorzugt zwischen 900 nm und 1700 nm vorher bestimmt wurde.

2. Verfahren nach Anspruch 1, **dadurch gekennzeichnet, dass** der Aushärtungsgrad der mindestens einen formaldehydhaltigen Harzschicht nach dem Aushärten der formaldehydhaltigen Harzschicht mit der Holzwerkstoffplatte innerhalb einer Produktionslinie der Holzwerkstoffplatte bestimmt wird.

3. Verfahren nach Anspruch 1, **dadurch gekennzeichnet, dass** der Aushärtungsgrad der mindestens einen formaldehydhaltigen Harzschicht nach dem Aushärten der formaldehydhaltigen Harzschicht mit der Holzwerkstoffplatte außerhalb einer Produktionslinie der Holzwerkstoffplatte bestimmt wird.

4. Verfahren nach einem der vorhergehenden Ansprüche, **dadurch gekennzeichnet, dass** der Aushärtungsgrad der mindestens einen formaldehydhaltigen Harzschicht nach dem Aushärten der formaldehydhaltigen Harzschicht mit der Holzwerkstoffplatte innerhalb und außerhalb einer Produktionslinie der Holzwerkstoffplatte bestimmt wird.

5. Verfahren nach einem der vorhergehenden Ansprüche, **dadurch gekennzeichnet, dass** die Referenzprobe mit bekanntem Aushärtungsgrad der formaldehydhaltigen Harzschicht eine auf einer Holzwerkstoffplatte aufgetragene formaldehydhaltige Harzschicht umfasst, wobei Holzwerkstoffplatte und formaldehydhaltige Harzschicht der Referenzprobe gleichartig zu der zu vermessenden Probe aus Holzwerkstoffplatte und formaldehydhaltiger Harzschicht sind.

6. Verfahren nach einem der vorhergehenden Ansprüche, **dadurch gekennzeichnet, dass** der Aushärtungsgrad der mindestens einen formaldehydhaltigen Harzschicht der mindestens einen Referenzprobe nach dem Aushärten der formaldehydhaltigen Harzschicht mit der Holzwerkstoffplatte anhand von mindestens einer der ausgehärteten Referenzprobe entnommenen Einzelprobe bestimmt wurde.

7. Verfahren nach Anspruch 6, **dadurch gekennzeichnet, dass** der Aushärtungsgrad der formaldehydhaitigen Harzschicht der Referenzprobe anhand von mindestens einer, bevorzugt mindestens zwei, drei, vier oder mehreren, der Referenzprobe entnommenen Einzelproben gemäß des Säuretests mit 4 M Salzsäure bestimmt wird.

8. Verfahren nach einem der vorhergehenden Ansprüche , **dadurch gekennzeichnet, dass** die mindestens eine formaldehydhaltige Harzschicht aus einem Melamin-Formaldehyd-Harz, einem Melamin-Harnstoff-Formaldehyd-Harz oder einem Harnstoff-Formaldehyd-Harz besteht.

9. Verfahren nach einem der vorhergehenden Ansprüche, **dadurch gekennzeichnet, dass** die mindestens eine formaldehydhaltige Harzschicht als Flüssigoverlay oder als Imprägnat einer Papierlage vorliegt.

10. Verfahren nach einem der vorhergehenden Ansprüche, **dadurch gekennzeichnet, dass** die mindestens eine formaldehydhaltige Harzschicht eine Dicke zwischen 10 und 150 µm, bevorzugt zwischen 20 und 100 µm, insbesondere bevorzugt zwischen 30 und 80 µm aufweist.

11. Verfahren nach einem der vorhergehenden Ansprüche, **dadurch gekennzeichnet, dass** die mindestens eine formaldehydhaltige Harzschicht mindestens zwei Lagen, bevorzugt mindestens drei nacheinander aufgetragene Lagen umfasst.

12. Verfahren nach einem der vorhergehenden Ansprüche, **dadurch gekennzeichnet, dass** die Holzwerkstoffplatte eine mitteldichte Faser (MDF)-, hochdichte Faser (HDF)- oder Grobspan (OSB)- oder Sperrholzplatte ist, oder eine Holz-Kunststoff-Platte (WPC) ist.

13. Verwendung von mindestens einem NIR-Detektor zur Bestimmung des Aushärtungsgrades von mindestens einer auf einer Holzwerkstoffplatte angeordneten wärmehärtbaren formaldehydhaltigen Harzschicht gemäß einem Verfahren nach einem der Ansprüche 1 bis 12 innerhalb und außerhalb einer Produktionslinie zur Herstellung von Holzwerkstoffplatten.

## Claims

1. Method for determining the degree of cure of at least one thermally curable formaldehyde-containing resin layer arranged on a wood composite board, after pressing the formaldehyde-containing resin layer with the wood composite board, comprising the steps of
- recording at least one NIR spectrum of the formaldehyde-containing resin layer arranged on the wood composite board after curing of the at least one formaldehyde-containing resin layer with the wood composite board using at least one NIR detector in a wavelength range between 500 nm and 2500 nm, preferably between 700 nm and 2000 nm, with particular preference between 900 nm and 1700 nm;
- determining the degree of cure of the at least one formaldehyde-containing resin layer by comparing the NIR spectrum that has been ascertained for the at least one formaldehyde-containing resin layer to at least one NIR spectrum that has been ascertained for at least one reference sample of the at least one formaldehyde-containing resin layer with a known degree of cure by way of a multivariate data analysis (MDA), wherein the multivariate data analysis is performed over the entire spectral range of the ascertained NIR spectrum,
wherein the at least one NIR spectrum that has been ascertained for the at least one reference sample with a known degree of cure of the at least one formaldehyde-containing resin layer after the curing of the formaldehyde-containing resin layer with the wood composite board was determined in advance using the same NIR detector in a wavelength range between 500 nm and 2500 nm, preferably between 700 nm and 2000 nm, with particular preference between 900 nm and 1700 nm.

2. Method according to Claim 1, **characterized in that** the degree of cure of the at least one formaldehyde-containing resin layer after the curing of the formaldehyde-containing resin layer with the wood composite board is determined in a production line of the wood composite board.

3. Method according to Claim 1, **characterized in that** the degree of cure of the at least one formaldehyde-containing resin layer after curing of the formaldehyde-containing resin layer with the wood composite board is determined outside a production line of the wood composite board.

4. Method according to one of the preceding claims, **characterized in that** the degree of cure of the at least one formaldehyde-containing resin layer after the curing of the formaldehyde-containing resin layer with the wood composite board is determined in and outside a production line of the wood composite board.

5. Method according to one of the preceding claims, **characterized in that** the reference sample with a known degree of cure of the formaldehyde-containing resin layer comprises a formaldehyde-containing resin layer that has been applied on a wood composite board, wherein wood composite board and formaldehyde-containing resin layer of the reference sample are of the same type as the sample to be measured of wood composite board and formaldehyde-containing resin layer.

6. Method according to one of the preceding claims, **characterized in that** the degree of cure of the at least one formaldehyde-containing resin layer of the at least one reference sample after the curing of the formaldehyde-containing resin layer with the wood composite board has been determined on the basis of at least one individual sample taken from the cured reference sample.

7. Method according to Claim 6, **characterized in that** the degree of cure of the formaldehyde-containing resin layer of the reference sample is determined on the basis of at least one, preferably at least two, three, four or more individual samples taken from the reference sample in accordance with the acid test with 4 M hydrochloric acid.

8. Method according to one of the preceding claims, **characterized in that** the at least one formaldehyde-containing resin layer consists of a melamine formaldehyde resin, a melamine urea formaldehyde resin or a urea formaldehyde resin.

9. Method according to one of the preceding claims, **characterized in that** the at least one formaldehyde-containing resin layer is present as a liquid overlay or as an impregnating agent on a paper layer.

10. Method according to one of the preceding claims, **characterized in that** the at least one formaldehyde-containing resin layer has a thickness of between 10 and 150 µm, preferably between 20 and 100 µm, with particular preference between 30 and 80 µm.

11. Method according to one of the preceding claims, **characterized in that** the at least one formaldehyde-containing resin layer comprises at least two coats, preferably at least three successively applied coats.

12. Method according to one of the preceding claims, **characterized in that** the wood composite board is an medium-density fibreboard (MDF), a high-density fibreboard (HDF) or an oriented strand board (OSB) or plywood, or a wood-plastic composite (WPC) board.

13. Use of at least one NIR detector for determining the degree of cure of at least one thermally curable formaldehyde-containing resin layer arranged on a wood composite board in accordance with a method according to one of Claims 1 to 12 in and outside a production line for producing wood composite boards.

## Revendications

1. Procédé servant à déterminer le degré de durcissement d'au moins une couche de résine contenant du formaldéhyde thermodurcissable disposée sur un panneau en matériau dérivé du bois, après le pressage de la couche de résine contenant du formaldéhyde avec le panneau en matériau dérivé du bois, comprenant les étapes consistant à
- relever au moins un spectre NIR (proche infrarouge) de la couche de résine contenant du formaldéhyde disposée sur le panneau en matériau dérivé du bois après le durcissement de l'au moins une couche de résine contenant du formaldéhyde avec le panneau en matériau dérivé du bois en utilisant au moins un détecteur NIR dans une plage de longueurs d'onde comprise entre 500 nm et 2500 nm, de manière préférée comprise entre 700 nm et 2000 nm, en particulier de manière préférée comprise entre 900 nm et 1700 nm ;
- définir le degré de durcissement de l'au moins une couche de résine contenant du formaldéhyde en comparant le spectre NIR déterminé pour l'au moins une couche de résine contenant du formaldéhyde à au moins un spectre NIR déterminé pour au moins un échantillon de référence de l'au moins une couche de résine contenant du formaldéhyde avec un degré de durcissement connu au moyen d'une analyse de données à variables multiples (MDA), dans lequel l'analyse de données à variables multiples est effectuée sur toute la plage spectrale du spectre NIR déterminé,
dans lequel l'au moins un spectre NIR déterminé pour l'au moins un échantillon de référence avec un degré de durcissement connu de l'au moins une couche de résine contenant du formaldéhyde a été défini au préalable après le durcissement de la couche de résine contenant du formaldéhyde avec le panneau en matériau dérivé du bois en utilisant le même détecteur NIR dans une plage de longueurs d'onde comprise entre 500 nm et 2500 nm, de manière préférée comprise entre 700 nm et 2000 nm, de manière particulièrement préférée comprise entre 900 nm et 1700 nm.

2. Procédé selon la revendication 1, **caractérisé en ce que** le degré de durcissement de l'au moins une couche de résine contenant du formaldéhyde est défini avec le durcissement de la couche de résine contenant du formaldéhyde avec le panneau en matériau dérivé du bois à l'intérieur d'une ligne de production du panneau en matériau dérivé du bois.

3. Procédé selon la revendication 1, **caractérisé en ce que** le degré de durcissement de l'au moins une couche de résine contenant du formaldéhyde est défini après le durcissement de la couche de résine contenant du formaldéhyde avec le panneau en matériau dérivé du bois à l'extérieur de la ligne de production du panneau en matériau dérivé du bois.

4. Procédé selon l'une quelconque des revendications précédentes, **caractérisé en ce que** le degré de durcissement de l'au moins une couche de résine contenant du formaldéhyde est défini après le durcissement de la couche de résine contenant de formaldéhyde avec le panneau en matériau dérivé du bois à l'intérieur et à l'extérieur de la ligne de production du panneau en matériau dérivé du bois.

5. Procédé selon l'une quelconque des revendications précédentes, **caractérisé en ce que** l'échantillon de référence avec un degré de durcissement connu de la couche de résine contenant du formaldéhyde comprend une couche de résine contenant du formaldéhyde appliquée sur un panneau en matériau dérivé du bois, dans lequel le panneau en matériau dérivé du bois et la couche de résine contenant du formaldéhyde de l'échantillon de référence sont similaires à l'échantillon à mesurer composé d'un panneau en matériau dérivé du bois et d'une couche de résine contenant du formaldéhyde.

6. Procédé selon l'une quelconque des revendications précédentes, **caractérisé en ce que** le degré de durcissement de l'au moins une couche de résine contenant du formaldéhyde de l'au moins un échantillon de référence a été défini après le durcissement de la couche de résine contenant du formaldéhyde avec le panneau en matériau dérivé du bois à l'aide d'au moins un échantillon individuel prélevé de l'échantillon de référence durci.

7. Procédé selon la revendication 6, **caractérisé en ce que** le degré de durcissement de la couche de résine contenant du formaldéhyde de l'échantillon de référence est défini à l'aide d'au moins un, de manière préférée d'au moins deux, trois, quatre ou de plusieurs des échantillons individuels prélevés de l'échantillon de référence selon le test d'acidité avec de l'acide chlorhydrique 4 M.

8. Procédé selon l'une quelconque des revendications précédentes, **caractérisé en ce que** l'au moins une couche de résine contenant du formaldéhyde est constituée d'une résine de mélamine-formaldéhyde, d'une résine de mélamine-urée-formaldéhyde ou d'une résine d'urée-formaldéhyde.

9. Procédé selon l'une quelconque des revendications précédentes, **caractérisé en ce que** l'au moins une couche de résine contenant du formaldéhyde est présente sous la forme de liquides superposés ou sous la forme d'un produit d'imprégnation de papier.

10. Procédé selon l'une quelconque des revendications précédentes, **caractérisé en ce que** l'au moins une couche de résine contenant du formaldéhyde présente une épaisseur comprise entre 10 et 150 µm, de manière préférée comprise entre 20 et 100 µm, de manière particulièrement préférée comprise entre 30 et 80 µm.

11. Procédé selon l'une quelconque des revendications précédentes, **caractérisé en ce que** l'au moins une couche de résine contenant du formaldéhyde comprend au moins deux couches, de manière préférée au moins trois couches appliquées les unes après les autres.

12. Procédé selon l'une quelconque des revendications précédentes, **caractérisé en ce que** le panneau en matériau dérivé du bois est un panneau en fibres à densité moyenne (MDF), un panneau en fibres à densité élevée (HDF) ou un panneau de particules orientées (OSB) ou un panneau de contreplaqué ou un panneau en bois et en plastique (WPC).

13. Utilisation d'au moins un détecteur NIR servant à définir le degré de durcissement d'au moins une couche de résine contenant du formaldéhyde thermodurcissable disposée sur un panneau en matériau dérivé du bois selon un procédé selon l'une quelconque des revendications 1 à 12 à l'intérieur et à l'extérieur d'une ligne de production servant à fabriquer des panneaux en matériau dérivé du bois.
